# EUROPÄISCHE PATENTANMELDUNG

(11) **EP 4 379 225 A1**
(43) Veröffentlichungstag der Anmeldung: **05.06.2024**
(21) Anmeldenummer: 23213283.7
(22) Anmeldetag: 30.11.2023
(51) Int. Cl.: F16C 23/04, F16C 33/12, F16C 33/14

(54) **GLEITLAGERRING UND VERFAHREN ZUR HERSTELLUNG EINES GLEITLAGERRINGS**

(30) Priorität: 02.12.2022 DE 102022213022
(71) Anmelder: Aktiebolaget SKF, 415 50 Göteborg (SE)
(72) Erfinder: Buettner, Martin, 97359 Schwarzach (DE); Vierling, Andreas, 97525 Schwebheim (DE); Henninger, Frank, 97506 Grafenrheinfeld (DE)
(74) Vertreter: Kuhstrebe, Jochen

(57) **Zusammenfassung**

Gleitlagerring (2, 2', 4, 4') mit einem Grundmaterial (8, 10) und einer auf dem Grundmaterial (8, 10) aufgebrachten Schicht (6), wobei die Schicht (6) eine laserauftragsgeschweißte Schicht ist und dass das Grundmaterial (8, 10) ein metallischer Werkstoff ist, der eine höhere Elastizitätsgrenze als das Material der laserauftragsgeschweißten Schicht (6) aufweist.

## Beschreibung

Vorliegende Erfindung betrifft einen Gleitlagerring gemäß Patentanspruch 1. Des Weiteren betrifft die vorliegende Erfindung ein Gleitlager mit einem solchen Gleitlagerring gemäß Patentanspruch 9 und ein Verfahren zum Herstellen eines solchen Gleitlagerrings gemäß Patentanspruch 10.

Gleitlager können in verschiedenen technischen Bereichen eingesetzt werden, wobei je nach Anwendungsbereich unterschiedliche Anforderungen an diese Gleitlager bestehen, beispielsweise in Bezug auf Tragzahl bzw. Tragfähigkeit. Die Tragzahl definiert dabei, welche Kraft oder Last durch ein Gleitlager aufgenommen werden kann, bevor es bleibenden Schaden erleidet. Unter anderem im Bereich des Stahlwasserbaus, z.B. der Lagerung von Toren in Staudämmen und Schleusen, ist die Anforderung an die (quasi-)statische Tragfähigkeit, d.h. die Maximalbelastung eines Gleitlagers, sehr hoch, um eine sichere Anwendung auch nach Erdbeben etc. zu gewährleisten.

Bislang werden häufig Gleitlager eingesetzt, die aus monolithischen Ringen, d. h. Ringen aus einem Vollmaterial, bestehen. Das Vollmaterial von zumindest einem der Ringe ist dabei ein Gleitmaterial, um die Gleitfähigkeit der Ringe zueinander sicherzustellen. Hierzu können beispielsweise Bronze oder andere Kupferlegierungen verwendet werden. Allerdings handelt es sich z.B. bei Bronze um ein Material, das vielfach die Kundenwünsche an die Belastbarkeit von Gleitlagern insbesondere im Bereich des Stahlwasserbau nur eingeschränkt erfüllt. Der Anspruch an die Tragfähigkeit solcher Gleitlager überlastet die Elastizitätsgrenze eines solchen Bronze-Materials. Die Elastizitätsgrenze definiert den Wert der mechanischen Spannung, bei dessen Überschreitung plastische Verformung stattfindet. Die Tragfähigkeit bzw. Tragzahl, die in verschiedenen Anwendungsbereichen (z.B. Stahlwasserbau, Stahlindustrie, Öl- und Gas-Industrie, Bergbau), in denen hohe Belastbarkeit, Korrosionswiderstand oder Kontaminationswiderstand gefordert wird, erforderlich ist, würde jedoch bei der entsprechenden Maximalkraft zu einer plastischen Verformung eines Bronzerings, wie er bislang verwendet wird, führen. Eine solche plastische Verformung kann beispielsweise zu einer verringerten Lagerbetriebszeit aufgrund von Leistungseinbußen oder gegebenenfalls Ausfällen der Lager führen.

Es ist deshalb Aufgabe vorliegender Erfindung ein Gleitlager bereitzustellen, das eine geringe plastische Verformung und eine gute Gleitfähigkeit bei gleichzeitig hoher Tragzahl bereitstellt.

Diese Aufgabe wird durch einen Gleitlagerring gemäß Patentanspruch 1, ein Gleitlager mit einem solchen Gleitlagerring gemäß Patentanspruch 9 und ein Verfahren zum Herstellen eines solchen Gleitlagerrings gemäß Patentanspruch 10 gelöst.

Der Gleitlagerring weist ein Grundmaterial und eine auf dem Grundmaterial aufgebrachte Schicht auf. Um nun im Vergleich zu bisherigen Gleitlagerringen einen höher belastbaren Gleitlagerring bereitzustellen, der dem Gleitlager eine höhere Tragzahl bzw. Tragfähigkeit verleiht und gleichzeitig gute Gleiteigenschaften bereitstellt, wird als Grundmaterial ein metallischer Werkstoff verwendet, der eine höhere Elastizitätsgrenze als das Material der auf dem Grundmaterial aufgebrachten Schicht aufweist. Ein solcher metallischer Werkstoff weist eine höhere Festigkeit und Streckgrenze auf als das Material der aufgebrachten Schicht. Z.B. kann dies ein Stahl sein, insbesondere Stähle, deren Festigkeiten durch eine Wärmebehandlung weiter erhöht werden können. Auf diese Weise kann der Gleitlagerring eine erhöhte Tragzahl aufweisen, z.B. gegenüber einem monolithischen Ring aus einer Kupferlegierung.

Unter einem Gleitlagerring wird in diesem Kontext ein Bauteil verstanden, das eine Lauffläche aufweist, die sich gegen eine Gegenlauffläche eines anderen Bauteils bewegt. Dies kann ein Ring eines Gleitlagers mit Innen- und Außenringen sein. Der Gleitlagerring kann jedoch auch eine Welle, insbesondere Hohlwelle, Buchse, Flanschbuchse oder ähnliches sein, die jeweils eine Lauffläche aufweist. Des Weiteren kann der Gleitlagerring eine zylindrische Lauffläche aufweisen, kann aber auch sphärische oder sonstige gekrümmte Laufflächen aufweisen. Insbesondere kann der Gleitlagerring in einem Gelenklager eingesetzt werden, das als Radial-; Schräg-, oder Axialgelenklager ausgebildet sein kann. Es sollte jedoch beachtet werden, dass der Gleitlagerring nicht auf die speziell genannten Ausgestaltungen eingeschränkt ist, sondern jedes Bauteil mit einer Lauffläche sein kann, wie oben definiert ist.

Um nicht nur eine ausreichende Tragzahl, sondern auch eine gute Gleitfähigkeit des Gleitlagerrings sicherzustellen, handelt es sich bei der aufgebrachten Schicht um eine laserauftragsgeschweißte Schicht. Eine solche laserauftragsgeschweißte Schicht stellt eine zuverlässige, inter-metallische Verbindung zwischen der aufgebrachten Schicht und dem Grundmaterial dar. Beim Laser-Auftragsschweißen (Laser Cladding) wird eine flächige Metallbindung zwischen den beiden Werkstoffen, d. h. dem Grundmaterial und der aufgebrachten Schicht hergestellt. Das Grundmaterial wird dabei durch einen Laser erhitzt und aufgeschmolzen. Gleichzeitig wird ein inertes Gas gemischt mit feinem Pulver oder Drahtmaterial, dem Material der aufzubringenden Schicht, zugeführt (DED-Verfahren (Directed Energy Deposition). An der erhitzten Stelle schmilzt das Pulver oder Drahtmaterial auf und verbindet sich mit dem Grundmaterial. Durch das Laserauftragsschweißen, bei dem das Material der Schicht auf das Grundmaterial aufgeschmolzen wird, sind keine zusätzlichen Beschichtungen zur Haftverbesserung, wie zum Beispiel Kupfer- oder Nickelbeschichtungen, erforderlich, wie dies bei galvanischen Beschichtungen der Fall ist.

Da ein Metall als Grundmaterial verwendet wird, das eine höhere Elastizitätsgrenze als das Material der laserauftragsgeschweißten Schicht aufweist, kann insgesamt eine hohe Tragzahl bzw. Tragfähigkeit des Gleitlagerrings bereitgestellt werden. Dies ermöglicht eine Tragzahlerhöhung des gesamten Gleitlagerrings über die Elastizitätsgrenze der laserauftragsgeschweißten Schicht hinaus.

Durch die laserauftragsgeschweißte Schicht wird eine sichere, dauerhafte Verbindung zwischen der laserauftragsgeschweißten Schicht und dem Grundmaterial erzeugt. Des Weiteren wird durch die Verwendung des Grundmaterials mit höherer Elastizitätsgrenze eine irreversible Verformung des gesamten Gleitlagerrings signifikant reduziert bzw. findet innerhalb des zulässigen Tragzahlbereichs nur in der laserauftragsgeschweißten Schicht statt. Zwar wird durch eine solche Verformung der laserauftragsgeschweißten Schicht unter Umständen die tribologische Leistungsfähigkeit unter grenzwertigen Lastbedingungen reduziert, das Risiko eines sicherheitsrelevanten Ausfalls oder einer Fehlfunktion aufgrund einer starken irreversiblen Ring- oder Lagerverformung wird jedoch durch das Grundmaterial signifikant reduziert. Gleichzeitig kann durch die laserauftragsgeschweißte Schicht zusätzlich zu der erhöhten Belastbarkeit aufgrund der Kombination von Grundmaterial und laserauftragsgeschweißte Schicht die Reibung verringert und/oder der Gleitlagerring vor Korrosion und/oder Verschleiß geschützt werden, wie im Folgenden näher erläutert ist. Durch die höhere Belastbarkeit kann der Gleitlagerring, oder ein Gleitlager, in welchen der Gleitlagerring eingebaut ist, z.B. kleiner ausgebildet sein, als dies bei bisherigen Gleitlagerringen möglich war.

Gemäß einer Ausführungsform ist die laserauftragsgeschweißte Schicht eine reibungsverringernde Schicht, eine Korrosionsschutzschicht und/oder eine Verschleißschutzschicht. Wird die laserauftragsgeschweißte Schicht nur auf der Laufbahn des Gleitlagerrings aufgebracht, kann sie insbesondere als Gleitschicht dienen. Vorzugsweise ist sie in einem solchen Fall aus einem Material gebildet, das die Funktionalität einer Gleitschicht erfüllen kann, wie z.B. eine Kupferlegierung. Auf diese Weise kann die Gleitfunktion des Gleitlagerrings im Vergleich zu einem Gleitlagerring, der nur aus dem Grundmaterial besteht, erhöht werden. Zusätzlich zu der Funktion einer Gleitschicht, oder auch alternativ dazu, kann die laserauftragsgeschweißte Schicht auch zum Schutz vor Korrosion und/oder Verschleiß dienen, entweder nur im Bereich der Laufbahn oder im Bereich des gesamten Lagerrings, insbesondere dann, wenn die laserauftragsgeschweißte Schicht auf der gesamten Oberfläche des Gleitlagerrings aufgebracht ist, wie unten näher erläutert ist.

Gemäß einer weiteren Ausführungsform weist die laserauftragsgeschweißte Schicht reibungsreduzierende und/oder verschleißreduzierende Füllstoffe auf. Dem Material der laserauftragsgeschweißten Schicht können beispielsweise im Zuge des Auftragsschweißprozesses zusätzliche reibungs- und verschleißreduzierende Füllstoffe zugegeben werden. Diese können flächig oder zumindest flächenanteilig in die laserauftragsgeschweißte Schicht eingebettet oder auf der laserauftragsgeschweißten Schicht aufgebracht sein. Bei den Füllstoffen kann es sich unter anderem um organische (zum Beispiel PTFE, PEEK, PAI, PI, PBI) oder anorganische (Molybdändisulfid (MoS2), Graphit, Carbon-Nanotubes, Graphen, Wolframdisulfid (WS2), hexagonales Bornitrid, und/oder reibungsreduzierende metallische bzw. halbmetallische Legierungselemente (z.B. Sn, In, Bi, Pb, Ag, Sb, jeweils alleine oder in Kombination) oder ähnliches handeln. Des Weiteren können Schmierstoffe, Trockengleitwerkstoffe oder ähnliches auf andere bekannte Weise, zum Beispiel durch Einbringung von Trockengleitwerkstoffen in Bohrungen (z.B. Festschmierstoffstopfen) oder andere Strukturen, z.B. Nuten, eingebracht werden. Auf diese Weise kann die laserauftragsgeschweißte Schicht nicht nur z.B. die Gleitfähigkeit des Gleitlagerrings verbessern, während gleichzeitig durch das Grundmaterial eine hohe Tragzahl gewährleistet wird, sondern die laserauftragsgeschweißte Schicht kann noch weitere zusätzliche Funktionen erfüllen, wie beispielsweise eine zusätzliche Reibungsreduzierung oder Verschleißreduzierung durch solche Füllstoffe.

Da das Material, aus dem die laserauftragsgeschweißte Schicht besteht, direkt beim Auftragsschweißen mit reibungs- und/oder verschleißreduzierenden Füllstoffen versetzt werden kann, wird dadurch der Aufwand bzw. die Kosten zur Einbringung eines solchen Schmierstoffs, insbesondere bei Trockengleitwerkstoffen, reduziert. Insbesondere kann hierbei der Trockengleitwerkstoff direkt in das Metallpulver oder das Drahtmaterial, das beim Auftragsschweißen auf das Grundmaterial des Gleitlagerrings aufgeschweißt wird, eingebracht werden. Ein zusätzlicher Schritt ist hierbei nicht notwendig.

Der Gleitlagerring kann sowohl vor dem Auftragen der laserauftragsgeschweißten Schicht als auch nach dem Auftragen der laserauftragsgeschweißten Schicht noch weiteren Verfahren, wie zum Beispiel einer Beschichtung, unterzogen werden, um eine gewünschte Bauteileigenschaft, wie zum Beispiel einen zusätzlichen Korrosionsschutz oder ähnliches zu erreichen. So ist es beispielweise möglich, zusätzlich zu der laserauftragsgeschweißten Schicht noch weitere Schichten unter und/oder auf der laserauftragsgeschweißten Schicht vorzusehen, um dem Gleitlagerring weitere Funktionen bzw. Eigenschaften zu verleihen.

Bei dem metallischen Werkstoff des Grundmaterials kann es sich z.B. um Stahl, wie Vergütungsstahl 42CrMo4+QT oder Wälzlagerstahl 100Cr6 oder höher legierten Stahl mit niedrigem Kohlenstoffgehalt, handeln. Insbesondere kann das Grundmaterial Bor-legierter Stahl, insbesondere mit einem Borgehalt von 0,0008 Masse-% bis 0,0050 Masse-%, sein. Ein solches Grundmaterial kann beispielsweise 27MnCrB5-2 und 33MnCrB5-2 nach EN ISO 683-2 sein. Ein Bor-legierter Stahl bietet den Vorteil, dass relativ hohe Härte- und Festigkeitswerte bei gleichzeitig niedrigem Kohlenstoffgehalt ermöglicht werden. Des Weiteren enthalten Bor-legierte Stähle typischerweise kaum bzw. kein Nickel. Durch den Verzicht auf Nickel, das einen hohen Kostenfaktor darstellt, ist somit eine kostengünstige Herstellung des Gleitlagerrings möglich.

Der metallische Werkstoff des Grundmaterials kann des Weiteren im Vergleich zu Gleitlagerringen, die als Vollmaterial eine Kupferlegierung aufweisen, den Vorteil bereitstellen, dass er magnetisierbar auswählbar ist. Diese Magnetisierbarkeit ermöglicht eine einfachere Bearbeitung, da der Gleitlagerring z.B. magnetisch gespannt werden kann.

Gemäß einer Ausführungsform weist das Grundmaterial einen Kohlenstoffgehalt von weniger als 0,37 m-% auf. Je weniger Kohlenstoff in dem Grundmaterial enthalten ist, desto einfacher lässt sich die Gleitschicht durch Auftragsschweißen aufbringen. Durch einen niedrigen Kohlenstoffgehalt (d.h. einen Kohlenstoffanteil von weniger als 0,37 %) werden Martensitische Gefügeumwandlungen vermieden bzw. vermindert und dadurch unerwünschte Härtespitzen und die Gefahr von Rissbildung und Abplatzungen der laserauftragsgeschweißten Schicht reduziert.

Gemäß einer weiteren Ausführungsform weist die laserauftragsgeschweißte Schicht eine Kupferlegierung, insbesondere Bronze, auf. Eine solche Kupferlegierung, z.B. Bronze, Messing, Aluminium-Bronze oder Kupfer-Nickel-Zinn (CuNiSn), stellt ein Material dar, welches besonders gut als Gleitschicht geeignet ist, da es gute Gleiteigenschaften durch eine niedrige Neigung zum Fressen bzw. Adhäsivverschleiß aufweist.

Die Schichtdicke der laserauftragsgeschweißten Schicht beträgt vorzugsweise bis zu maximal 10 mm. Diese Schichtdicke wird vorzugsweise weder im aufgebrachten, d.h. ohne finale Bearbeitung, noch überdrehten oder geschliffenen Zustand überschritten. Im Vergleich zur Dicke des Grundmaterials ist die laserauftragsgeschweißte Schicht daher relativ dünn. Dies hat den Vorteil, dass die hohe Tragzahl, die dem Gleitlagerring durch das Grundmaterial verliehen wird, durch die laserauftragsgeschweißte Schicht nicht beeinträchtigt wird.

Gemäß einer weiteren Ausführungsform ist die laserauftragsgeschweißte Schicht auf der gesamten Oberfläche des Gleitlagerrings vorgesehen. Wenn die laserauftragsgeschweißte Schicht nicht nur auf der Gleitfläche oder Laufbahn, sondern auf dem gesamten Gleitlagerring aufgebracht ist, hat dies z.B. den Vorteil, dass zusätzlich zur Funktion der Gleitfähigkeit, je nach Wahl des aufgeschweißten Werkstoffs, ein Korrosionsschutz bereitgestellt werden kann. Da die laserauftragsgeschweißte Schicht das gesamte Grundmaterial des Gleitlagerrings umgibt bzw. einschließt, wird das Grundmaterial vollständig zur Außenseite hin abgeschirmt und die laserauftragsgeschweißte Schicht kann den Gleitlagerring vor Korrosion schützen.

Des Weiteren kann die laserauftragsgeschweißte Schicht als mehrschichtiges System aufgebracht sein. In diesem Fall kann die laserauftragsgeschweißte Schicht durch mehrere Schichten gebildet sein, die aus demselben oder gegebenenfalls unterschiedlichen Materialien bestehen können. Wie bereits oben erläutert, können zusätzlich zu der laserauftragsgeschweißten Schicht noch weitere Schichten, unter oder über der laserauftragsgeschweißten Schicht, vorhanden sein, die weitere zusätzliche Eigenschaften bereitstellen können.

Gemäß einem weiteren Aspekt wird ein Gleitlager mit einem Gleitlagerinnenring und einem Gleitlageraußenring vorgeschlagen. Die beiden Ringe sind relativ zueinander rotierbar. Zumindest einer der Ringe wird dabei durch einen Gleitlagerring, wie er oben beschrieben ist, gebildet. Dies hat den Vorteil, dass beide Ringe aus einem relativ günstigen Grundmaterial, wie zum Beispiel Bor-legiertem Stahl oder Vergütungsstahl, hergestellt sind und auf zumindest einem der Ringe eine laserauftragsgeschweißte Schicht aus einem teureren Material, wie zum Beispiel Bronze, aufgebracht ist. Durch die laserauftragsgeschweißte Schicht wird eine stabile, flächige Metallbindung zwischen dem Grundmaterial und der laserauftragsgeschweißten Schicht erzeugt. Durch die Gleitfläche auf einem der Ringe wird eine gute Gleiteigenschaft zwischen den beiden Ringen bereitgestellt, und der andere Ring kann ebenfalls aus einem günstigen Grundmaterial, wie zum Beispiel einem Standardringmaterial 42CrMo4+QT, hergestellt werden. Das Grundmaterial der Gleitringe, das insbesondere ein metallischer Werkstoff mit einer höheren Elastizitätsgrenze als das Material der laserauftragsgeschweißten Schicht ist, hat des Weiteren den Vorteil, dass in dem Fall von radial oder axial geteilten Ringen eine Verschraubung der Ringhälften aufgrund des stabileren Materials zuverlässig möglich ist.

Gemäß einem weiteren Aspekt wird ein Verfahren zum Herstellen eines Gleitlagerrings vorgeschlagen, wobei der Gleitlagerring ein Grundmaterial und eine auf dem Grundmaterial aufgebrachte Schicht aufweist. Das Verfahren weist des Weiteren den Schritt des Aufbringens der Schicht durch Laser-Auftragsschweißen (Laser Cladding (Directed Energy Deposition (DED) Verfahren) entweder mit Einsatz von Drahtmaterial oder mit Auftragswerkstoff in Pulverform) auf dem Grundmaterial auf, das ein metallischer Werkstoff ist, der eine höhere Elastizitätsgrenze als das Material der laserauftragsgeschweißten Schicht aufweist.

Die oben in Bezug auf den Gleitlagerring und das Gleitlager beschriebenen Merkmale und Vorteile gelten für das Verfahren in analoger Weise.

Weitere Vorteile und vorteilhafte Ausführungsformen sind in der Beschreibung, den Zeichnungen und den Ansprüchen angegeben. Dabei sind insbesondere die in der Beschreibung und in den Zeichnungen angegebenen Kombinationen der Merkmale rein exemplarisch, so dass die Merkmale auch einzeln oder anders kombiniert vorliegen können.

Im Folgenden soll die Erfindung anhand von in den Zeichnungen dargestellten Ausführungsbeispielen näher beschrieben werden. Dabei sind die Ausführungsbeispiele und die in den Ausführungsbeispielen gezeigten Kombinationen rein exemplarisch und sollen nicht den Schutzbereich der Erfindung festlegen. Dieser wird allein durch die anhängigen Ansprüche definiert.

Es zeigen:
Fig. 1: eine schematische Querschnittsansicht eines Gleitlagers gemäß einer ersten Ausführungsform;
Fig. 2: eine schematische Querschnittsansicht eines Gleitlagers gemäß einer zweiten Ausführungsform;
Fig. 3: eine schematische Querschnittsansicht eines Gleitlagers gemäß einer dritten Ausführungsform; und
Fig. 4: eine schematische Querschnittsansicht eines Gleitlagers gemäß einer vierten Ausführungsform.

Im Folgenden werden gleiche oder funktionell gleichwirkende Elemente mit denselben Bezugszeichen gekennzeichnet.

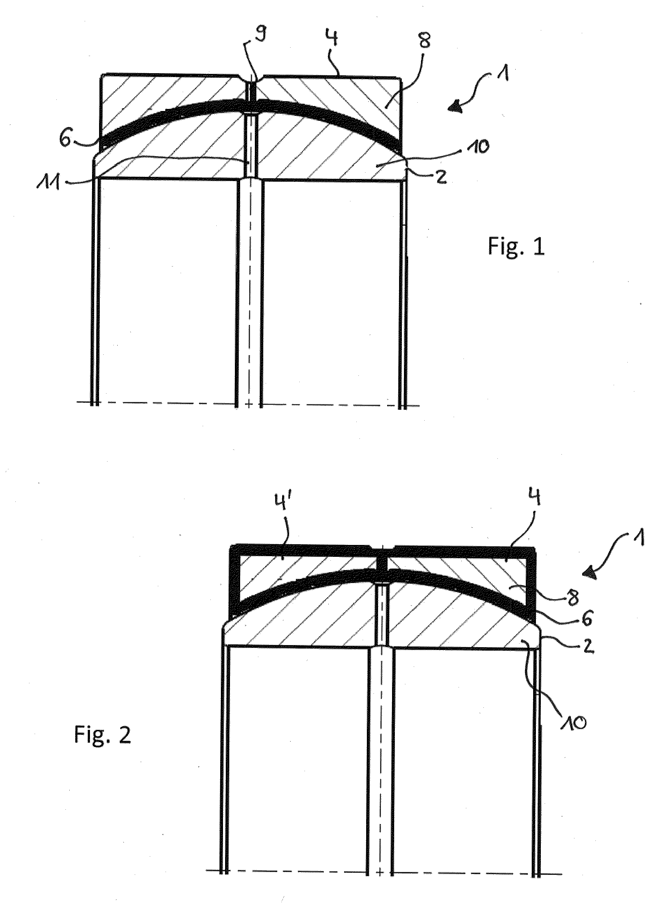

Fig. 1 zeigt ein Gleitlager 1, das aus einem Gleitlagerinnenring 2 und einem Gleitlagerau-ßenring 4 besteht. Die beiden Gleitlagerringe 2, 4 sind hier jeweils als einteilige Ringe ausgestaltet. Alternativ können die Gleitlagerringe 2, 4 auch als radial geteilte Ringe oder als axial geteilte Ringe ausgestaltet sein. Des Weiteren sollte beachtet werden, dass hier beispielhaft ein Gleitlager 1 beschrieben ist. Der hier im Zusammenhang mit dem Gleitlager 1 beschriebene Gleitlagerring kann jedoch auch in anderen Anwendungen verwendet werden, wie beispielsweise als Welle oder Buchse, wie auch oben definiert ist.

Um ein kostengünstiges, aber gleichzeitig effizientes Gleitlager 1 bereitzustellen, weist zumindest einer der Gleitlagerringe 2, 4 eine laserauftragsgeschweißte Schicht 6 auf. Die laserauftragsgeschweißte Schicht 6 besteht vorzugsweise aus einem Gleitmaterial, wie zum Beispiel einer Kupferlegierung, wie Bronze oder Aluminium-Bronze. Wie in Fig. 1 gezeigt ist, ist die laserauftragsgeschweißte Schicht 6 als Gleitschicht auf der Gleitfläche des Gleitlageraußenrings 4 aufgebracht.

Um zusätzlich zu der erforderlichen Gleiteigenschaft auch eine hohe Tragzahl bzw. Tragfähigkeit des Gleitlagers 1 bereitzustellen, besteht hier der Gleitlageraußenring 4 aus einem Grundmaterial 8, auf dem die Gleitschicht 6 mittels Laser-Auftragsschweißen aufgebracht ist. Das Grundmaterial 8 ist ein metallischer Werkstoff, wie beispielsweise Bor-Stahl oder Wälzlagerstahl, der eine hohe Tragzahl ermöglicht. Insbesondere weist das Grundmaterial 8 eine höhere Elastizitätsgrenze als das Material der laserauftragsgeschweißten Schicht 6 auf. In das Grundmaterial 8, 10 des Gleitlageraußenrings 4 bzw. des Gleitlagerinnenrings 2 können optionale Schmierbohrungen 9, 11 eingebracht sein.

Die Gleitschicht 6 wird auf dieses Grundmaterial 8 als dünne, laserauftragsgeschweißte Schicht aufgebracht und stellt die für das Gleitlager 1 erforderliche Gleitfähigkeit des Gleitlageraußenrings 4 bereit. Die Kombination aus Grundmaterial 8 mit hoher bzw. höherer Elastizitätsgrenze und Gleitschicht 6 aus Gleitmaterial ermöglicht es, eine hohe Tragzahl bei gleichzeitig guten Gleiteigenschaften zu erhalten.

Im Gegensatz zu bisherigen Gleitlagern, bei denen die Ringe ausschließlich aus einem Gleitmaterial bestanden, wird durch die Kombination aus Grundmaterial 8 mit hoher bzw. höherer Elastizitätsgrenze und Gleitschicht 6 sowohl eine hohe Tragzahl als auch die Gleitfähigkeit bereitgestellt. Des Weiteren wird durch die auftragsgeschweißte Gleitschicht 6 eine gute Verbindung zwischen dem Grundmaterial 8 und der Gleitschicht 6 ermöglicht. Das Laser-Auftragsschweißen ermöglicht eine flächige, stabile und dauerhafte Metallverbindung zwischen den beiden Materialien und damit ein langlebiges Gleitlager 1.

In einer weiteren Ausführungsform, die in Fig. 2 dargestellt ist, kann der Gleitlageraußenring 4, 4' auch vollständig von der laserauftragsgeschweißten Schicht 6 umgeben sein. In dem Fall eines geteilten Außenrings 4, 4', wie er in Fig. 2 gezeigt ist, wird die laserauftragsgeschweißte Schicht 6 auf beide Hälften des geteilten Außenrings 4, 4' aufgebracht. Da der Gleitlageraußenring 4, 4' vollständig mit der laserauftragsgeschweißten Schicht 6 umgeben ist, stellt diese nicht nur eine Gleitschicht dar, sondern kann wird zusätzlich zur Gleiteigenschaft auch einen Korrosionsschutz des Grundmaterials 8 realisieren.

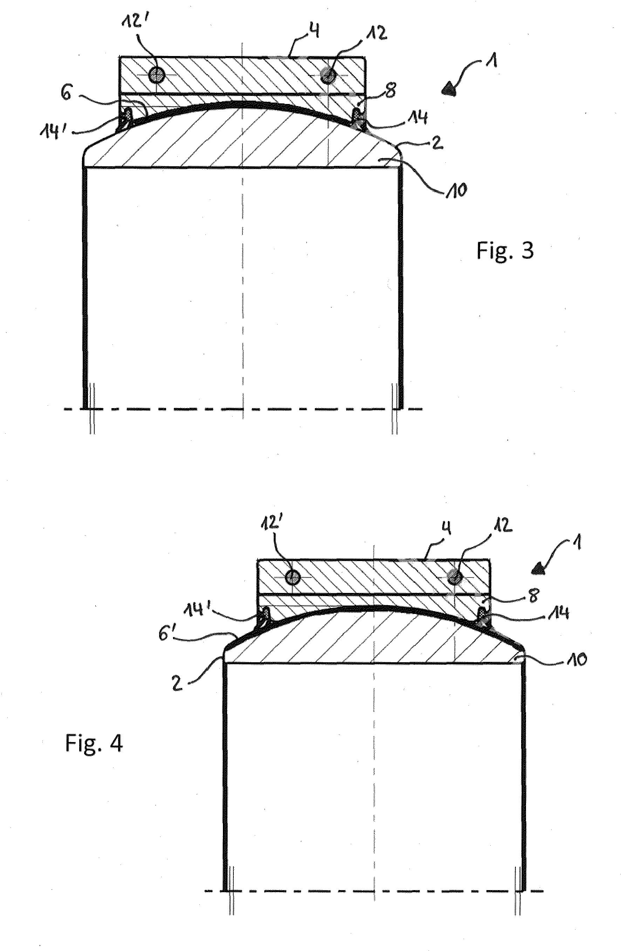

Anstelle eines radial geteilten Außenrings 4, 4' kann auch ein axial geteilter Außenring 4 mit einer solchen laserauftragsgeschweißten Schicht 6 versehen sein, wie in Fig. 3 gezeigt ist. In diesem Fall ist der Gleitlagerinnenring 2 als ungeteilter Ring vorgesehen.

In der hier gezeigten Ausführungsform ist die laserauftragsgeschweißte Schicht 6 wiederum nur auf der Gleitfläche des Gleitlageraußenrings 4 aufgebracht. Da das Grundmaterial 8 des Gleitlageraußenrings 4, 4' ein Material mit hoher bzw. höherer Elastizitätsgrenze als das Material der laserauftragsgeschweißten Schicht 6 ist, kann der Gleitlageraußenring 4, 4' mit Schraubenverbindungen 12, 12' verbunden werden. Solche Schraubenverbindungen 12, 12' wären nicht möglich, wenn der Gleitlageraußenring 4, 4' vollständig aus einem Gleitmaterial besteht, da das Gleitmaterial keine ausreichende Festigkeit hat, um eine solche Schraubverbindung sicher anbringen zu können.

Wie in Fig. 3 gezeigt ist, kann die laserauftragsgeschweißte Schicht 6 auf der Gleitfläche des Gleitlageraußenrings 4 zwischen zwei Dichtungen 14, 14' vorgesehen sein. Die Gleitschicht 6 kann sich auch über die Dichtungen 14, 14' hinaus erstrecken, oder, wie in Fig. 2, den kompletten Gleitlageraußenring 4, 4' umgeben.

Statt die laserauftragsgeschweißte Schicht 6 auf dem Gleitlageraußenring 4, 4' aufzubringen, ist es auch möglich, die laserauftragsgeschweißte Schicht 6 auf dem Gleitlagerinnenring 2 vorzusehen, wie in Fig. 4 dargestellt ist. In diesem Fall kann der Gleitlageraußenring 4 ebenfalls aus einem Material mit hoher bzw. höherer Elastizitätsgrenze als das Material der laserauftragsgeschweißten Schicht 6 oder einem sonstigen Standardmaterial gebildet sein, und der Gleitlagerinnenring 2 ist, wie der oben in Bezug auf Figuren 1-3 beschriebene Gleitlageraußenring 4, 4', mit einer laserauftragsgeschweißten Schicht 6 als Gleitschicht versehen, die die erforderliche Gleitfähigkeit bereitstellt. Das Grundmaterial 10 des Gleitlagerinnenrings 2 wiederum besteht ebenfalls aus einem Material mit hoher bzw. höherer Elastizitätsgrenze, um den Vorteil der Kombination aus Tragzahl und Gleitfähigkeit zu ermöglichen.

Die oben beschriebenen laserauftragsgeschweißten Schichten bzw. Gleitschichten 6 können mit zusätzlichen Funktionalitäten ausgestattet werden, indem in das Material der laserauftragsgeschweißten Schicht 6 weitere Füllstoffe eingebracht sind, die zur Reibungs- und/oder Verschleißreduzierung dienen. Des Weiteren sollte beachtet werden, dass die oben gezeigten Ausführungsformen sowohl für den Gleitlagerinnenring 2 als auch den Gleitlageraußenring 4, 4' gelten und jeweils auf zumindest einem der Gleitlagerringe 2, 2', 4, 4' angewendet werden. Alternativ ist es auch möglich, die laserauftragsgeschweißte Schicht 6 sowohl auf dem Gleitlagerinnenring 2 als auch dem Gleitlageraußenring 4, 4' vorzusehen, wobei die Gleitschicht 6 jeweils nur teilweise, insbesondere auf der Gleitfläche, oder vollständig um den jeweiligen Ring aufgetragen sein kann.

Durch das oben beschriebene Gleitlager bzw. die beschriebenen Gleitlagerringe ist es möglich, einen Gleitlagerring bereitzustellen, der sowohl eine hohe Tragzahl gewährleisten kann als auch gleichzeitig keine Einbußen in Bezug auf die Gleitfähigkeit zeigt.

### Bezugszeichenliste

- 1: Gleitlager
- 2,2': Gleitlagerinnenring
- 4, 4': Gleitlageraußenring
- 6: auftragsgeschweißte Schicht
- 8: Grundmaterial
- 9: Schmiernut
- 10: Grundmaterial
- 11: Schmierbohrung
- 12, 12': Schraubverbindung
- 14, 14': Dichtung

## Patentansprüche

1. Gleitlagerring (2, 2', 4, 4') mit einem Grundmaterial (8, 10) und einer auf dem Grundmaterial (8, 10) aufgebrachten Schicht (6), **dadurch gekennzeichnet, dass** die Schicht (6) eine laserauftragsgeschweißte Schicht ist und dass das Grundmaterial (8, 10) ein metallischer Werkstoff ist, der eine höhere Elastizitätsgrenze als das Material der laserauftragsgeschweißten Schicht (6) aufweist.

2. Gleitlagerring nach Anspruch 1, wobei die laserauftragsgeschweißte Schicht (6) eine reibungsverringernde Schicht, eine Korrosionsschutzschicht und/oder eine Verschleißschutzschicht ist.

3. Gleitlagerring nach einem der vorhergehenden Ansprüche, wobei die laserauftragsgeschweißte Schicht (6) reibungsreduzierende und/oder verschleißreduzierende Füllstoffe aufweist.

4. Gleitlagerring nach einem der vorhergehenden Ansprüche, wobei das Grundmaterial (8, 10) Stahl, insbesondere Bor-legierter Stahl, ist.

5. Gleitlagerring nach einem der vorhergehenden Ansprüche, wobei das Grundmaterial (8, 10) einen Kohlenstoffgehalt von weniger als 0,37 m-% aufweist.

6. Gleitlagerring nach einem der vorhergehenden Ansprüche, wobei die Gleitschicht (6) eine Kupferlegierung, insbesondere Bronze, aufweist.

7. Gleitlagerring nach einem der vorhergehenden Ansprüche, wobei die Schichtdicke der laserauftragsgeschweißten Schicht (6) maximal 10 mm ist.

8. Gleitlagerring nach einem der vorhergehenden Ansprüche, wobei die laserauftragsgeschweißte Schicht (6) auf der gesamten Oberfläche des Gleitlagerrings (2, 2', 4, 4') vorgesehen ist.

9. Gleitlager (1) mit einem Gleitlagerinnenring (2, 2') und einem Gleitlageraußenring (4, 4'), wobei zumindest einer des Gleitlagerinnenrings (2, 2') und des Gleitlagerau-ßenrings (4, 4') ein Gleitlagerring (2, 2', 4, 4') nach einem der vorhergehenden Ansprüche ist.

10. Verfahren zum Herstellen eines Gleitlagerrings (2, 2', 4, 4') nach einem der Ansprüche 1 bis 8, wobei der Gleitlagerring (2, 2', 4, 4') ein Grundmaterial (8, 10) und eine auf dem Grundmaterial (8, 10) aufgebrachte Schicht (6) aufweist, **dadurch gekennzeichnet, dass** das Verfahren ein Aufbringen der Schicht (6) auf dem Grundmaterial (8, 10) durch Laser-Auftragsschweißen aufweist, wobei das Grundmaterial (8, 10) ein metallischer Werkstoff ist, der eine höhere Elastizitätsgrenze als das Material der laserauftragsgeschweißten Schicht (6) aufweist.
